# FASCICULE DE BREVET EUROPEEN

(11) **EP 1 701 488 B1**
(45) Date de publication et mention de la délivrance du brevet: **01.10.2014**
(21) Numéro de dépôt: 05300180.6
(22) Date de dépôt: 11.03.2005
(51) Int. Cl.: H04L 12/70

(54) **Dispositif et procédé de génération de messages de routage pour un réseau de communication à plan de contrôle de type GMPLS**
Verfahren und Vorrichtung zur Erzeugung von Leitweglenkungsnachrichten für Netzwerke, die über gleiche Kontrolleben wie GMPLS verfügen.
Apparatus and method of routing messages generation for a GMPLS control plane type network

(43) Date de publication de la demande: 13.09.2006
(73) Titulaire: ALCATEL LUCENT, 92100 Boulogne-Billancourt (FR)
(72) Inventeur: Vigoureux, Martin, 75015 Paris (FR); Dotaro, Emmanuel, 91370 Verrieres le Buisson (FR); Papadimitriou, Dimitri, 1190 Brussels (BE)
(74) Mandataire: Sciaux, Edmond

(56) Documents cités:
- PAPADIMITRIOU, VIGOUREU, SHIOMOTO, BRUNGARD, LE ROUX: "Generalized Multi-Protocol Label Switching (GMPLS) Protocol Extensions for Multi-Region Networks (MRN)" IETF CCAMP WORKING GROUP DRAFT, [Online] 23 février 2005 (2005-02-23), XP002325900 Extrait de l'Internet: URL:http://www.ietf.org/internet-drafts/dr aft-papadimitriou-ccamp-gmpls-mrn-extensio ns-01.txt> [extrait le 2005-04-22]
- PAPADIMITRIOU ET AL.: "Generalized MPLS Architecture for Multi-Region Networks" IETF CCAMP WORKING GROUP DRAFT, [Online] février 2004 (2004-02), XP002325901 Extrait de l'Internet: URL:http://www.pilab.org/draft/downloads/d raft-vigoureux-shiomoto-ccamp-gmpls-mrn-04 .txt> [extrait le 2005-04-22]
- LE ROUX ET AL.: "Evaluation of existing GMPLS Protocols against Multi Region Networks" IETF CCAMP WORKING GROUP DRAFT, [Online] février 2005 (2005-02), XP002325902 Extrait de l'Internet: URL:http://www.ietf.org/internet-drafts/dr aft-leroux-ccamp-gmpls-mrn-eval-00.txt> [extrait le 2005-04-25]
- KOMPELLA ET AL.: "LSP Hierarchy with Generalized MPLS TE" IETF NETWORK WORKING GROUP, [Online] septembre 2002 (2002-09), XP002325903 Extrait de l'Internet: URL:http://www.ietf.org/internet-drafts/dr aft-ietf-mpls-lsp-hierarchy-08.txt> [extrait le 2005-04-25]

## Description

L'invention concerne les réseaux de communication à plan de contrôle de type GMPLS (« Generalized MultiProtocol Label Switching »).

Dans les réseaux précités, comme le sait l'homme de l'art, on peut définir entre les équipements de réseau (ou noeuds) des connexions de type « chemin de commutation d'étiquette » ou LSP (pour « Label Switched Path »).

Il est rappelé qu'un LSP est une connexion établie dans un réseau. Une fois cette connexion établie, le noeud qui se trouve placé en tête du LSP à la possibilité ou non de le transformer en adjacence de transmission (ou FA pour « Forwarding Adjacency »). Cela veut dire que le noeud de tête peut décider de déclarer ce LSP comme si c'était un lien (ou TE Link (pour « Traffic Engineering Link »)) entre lui et le noeud de queue qui est placé à l'extrémité opposée de la connexion. Un protocole de routage, par exemple de type OSPF-TE, se charge alors de diffuser les informations sur ce lien aux autres noeuds du réseau, qui pourront s'en servir pour calculer leurs routes, tout comme ils se servent des liens de type TE Link qui représentent les liens physiques. Par conséquent, un LSP n'est pas systématiquement une adjacence de transmission (ou FA).

Aux adjacences de transmission (ou FAs), et aux liens de type TE (ou TE Links) en général, sont associés des attributs d'ingénierie de trafic tels que la bande passante disponible, ou le niveau de protection. Une FA, représentant une adjacence de transmission point à point entre deux noeuds, les valeurs des attributs d'ingénierie de trafic sont uniques, homogènes et valables de bout en bout quel que soit le nombre de liens (ou segments) par lesquels passe la connexion sous-jacente. Or, il peut se produire qu'une connexion présente localement des caractéristiques différentes en termes d'attributs d'ingénierie de trafic. Par exemple, une connexion peut être protégée en son milieu sur un segment, mais non à ses extrémités. Une connexion peut également présenter des niveaux d'utilisation de bande passante différents sur l'un au moins de ses segments. Les capacités d'insertion et d'extraction de trafic le long d'une connexion donnée peuvent également, si elles existent, être différentes du débit en ligne de cette connexion. Par exemple, une adjacence de transmission peut supporter une unique longueur d'onde à 10 Gbits et être à un instant donné totalement inutilisée. Elle se trouve donc momentanément associée à une bande passante non réservée (ou disponible) de 10 Gbits. Si tous les noeuds de cette adjacence de transmission sont capables d'insérer un trafic selon un débit de 10 Gbits/s à l'exception de l'un d'entre eux, qui ne peut qu'insérer un trafic selon un débit de 2,5 Gbits/s, et qu'un noeud se sert de l'information concernant la bande passante disponible (10 Gbits) de l'adjacence de transmission pour décider de router son trafic à 7 Gbits/s vers le noeud disposant d'un débit de 2,5 Gbits/s, le trafic va être bloqué au niveau de ce dernier.

Le mécanisme de déclaration, sous forme de FA, d'une connexion, ne permet pas de rendre compte des caractéristiques inhomogènes (ou variables) de cette connexion.

Le document PAPADIMITRIOU, VIGOUREU, SHIMOTOMO, BRUNGARD, LE ROUX: « Generalized Multi-Protocol Label Switching (GMPLS) Protocol Extensions for Multi-Region Networks (MRN) » IETF CCAMP WORKING GROUP DRAFT, [Online] février 2005, XP002325900 Extrait de l'Internet : URL: http://www.ietf.org/html/internet-drafts-papadimitriou-ccamp-gmpls-mrn-extensions-01.txt concerne les aspects de signalisation et de routage dans un environnement GMPLS lorsque le réseau nécessitera de multiples capacités de commutation. Néanmoins, ce document ne divulgue pas le fait que des données d'information d'ingénierie de trafic (TE) soient représentatives de caractéristiques inhomogènes de segments d'au moins une connexion entre équipements de réseau.

L'invention a donc pour but de remédier à l'inconvénient précité dans le contexte d'un réseau à plan de contrôle GMPLS.

Elle propose à cet effet un procédé de génération de messages de routage pour un réseau de communication fonctionnant avec un plan de contrôle de type GMPLS.

Ce procédé se caractérise par le fait qu'il consiste à générer des messages de routage permettant de représenter certaines au moins des caractéristiques inhomogènes (ou variables) d'une ou plusieurs connexions entre équipements de réseau (ou noeuds) lors de leurs déclarations dans leur domaine de routage. La structure résultant de cette représentation d'une connexion constitue un bus linéaire qui est ci-après appelée adjacence de transmission à accès multiple ou FAMA (pour « Forwarding Adjacency Multiple Access »).

Selon l'invention, chaque message de routage qui définit une structure FAMA comprend un attribut comportant des données d'information d'ingénierie de trafic (TE) relatives à chaque segment reliant deux équipements de réseau participant à cette FAMA et représentatives des caractéristiques inhomogènes des segments.

Pour les noeuds du réseau une structure FAMA est ainsi la représentation d'une connexion qui s'étend entre plusieurs noeuds offrant pour au moins certains d'entre eux à un instant T un ou plusieurs points d'entrée et/ou de sortie. Comme d'autres connexions de type FA, les structures FAMA peuvent être prises en compte lors des calculs de route (ou chemins) et donc servir à router le trafic au travers du réseau.

Parmi les données d'information, représentatives des caractéristiques inhomogènes qui peuvent être transmises, on peut notamment citer certaines au moins des capacités d'insertion/extraction des interfaces que comprend chaque équipement de réseau participant à une structure FAMA, comme par exemple le débit d'accès et/ou la bande passante disponible. D'une manière générale, toute information d'ingénierie de trafic, utile au routage et concernant un segment entre deux équipements de réseau (ou noeuds), participant à une structure FAMA, ou les équipements de réseau (ou noeuds) de ce segment, peut être transmise. Parmi ces informations (relatives aux attributs d'ingénierie de trafic définis à l'IETF) on peut notamment citer, par exemple, la bande passante et/ou le niveau de protection de chaque segment de la structure FAMA.

Les données d'information représentatives des caractéristiques inhomogènes d'une connexion peuvent, par exemple, être regroupées au sein d'un multiplet (par exemple un vecteur).

Par exemple, on peut regrouper au sein d'un multiplet les données d'information qui sont représentatives des caractéristiques inhomogènes de chaque segment d'une structure FAMA, tandis que l'on regroupe au sein d'un singleton toutes les données d'information communes à l'ensemble des segments d'une structure FAMA. A titre d'exemple, on peut regrouper dans un multiplet les données d'information des interfaces qui offrent des capacités d'insertion/extraction inhomogènes.

L'invention propose également un dispositif de génération de messages de routage pour un réseau de communication fonctionnant avec un plan de contrôle de type GMPLS.

Ce dispositif se caractérise par le fait qu'il comprend des moyens de traitement chargés de générer des messages de routage contenant chacun un attribut comportant chacun des données d'information d'ingénierie de trafic (TE) représentatives de caractéristiques inhomogènes (ou variables) de segments d'au moins une connexion entre équipements de réseau (ou noeuds) lors de sa déclaration dans son domaine de routage, la représentation de cette connexion définissant ainsi une structure FAMA.

Ses moyens de traitement peuvent par exemple être chargés de placer dans un message de routage définissant une structure FAMA des données d'information représentant des caractéristiques inhomogènes relatives à certaines au moins des capacités d'insertion/extraction d'interfaces que comprend chaque équipement de réseau participant à cette structure FAMA, comme par exemple le débit d'accès et/ou la bande passante disponible. D'une manière générale, toute information d'ingénierie de trafic, utile au routage et concernant un segment entre deux équipements de réseau (ou noeuds), participant à une structure FAMA, ou les équipements de réseau (ou noeuds) de ce segment, peut être transmise. Parmi ces informations (relatives aux attributs d'ingénierie de trafic définis à l'IETF) on peut notamment citer, par exemple, la bande passante et/ou le niveau de protection de chaque segment de la structure FAMA.

Par ailleurs, ses moyens de traitement peuvent par exemple être chargés de regrouper les données d'information d'une structure FAMA, représentatives des caractéristiques inhomogènes de la connexion correspondante, au sein d'un multiplet (par exemple un vecteur).

Par exemple, ils peuvent regrouper au sein d'un multiplet les données d'information qui sont représentatives des caractéristiques inhomogènes de chaque segment d'une structure FAMA, et regrouper au sein d'un singleton toutes les données d'information communes à l'ensemble des segments d'une structure FAMA. A titre d'exemple, ils peuvent regrouper les données d'information des interfaces qui offrent des capacités d'insertion/extraction inhomogènes.

Qu'il s'agisse du procédé ou du dispositif, chaque message de routage présentant une structure FAMA peut être une instance d'un message d'un protocole de routage distribué choisi parmi au moins OSPF-TE (« Open Shortest Path First - Traffic Engineering ») et IS-IS-TE (« Intermediate System - Intermediate System - Traffic Engineering »).

L'invention propose également un équipement de réseau, comme par exemple un routeur, muni d'un dispositif de génération de messages de routage du type de celui présenté ci-avant.

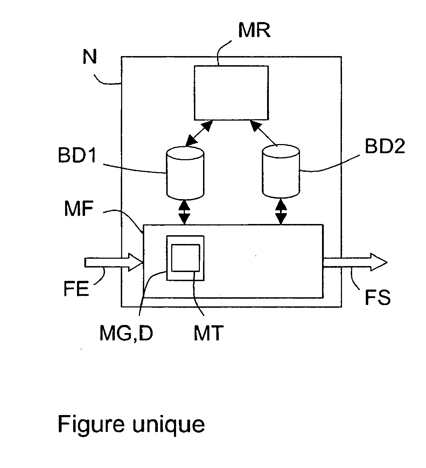

D'autres caractéristiques et avantages de l'invention apparaîtront à l'examen de la description détaillée ci-après, et du dessin annexé, sur lequel l'unique figure illustre de façon très schématique et fonctionnelle un routeur équipé d'un exemple de réalisation d'un dispositif de gestion selon l'invention. Le dessin annexé pourra non seulement servir à compléter l'invention, mais aussi contribuer à sa définition, le cas échéant.

L'invention a pour objet de permettre la prise en compte, lors du calcul des routes de transmission de trafic, de certaines au moins des caractéristiques inhomogènes (ou variables) des différents segments d'une structure FAMA, dans le contexte d'un réseau à plan de contrôle GMPLS.

L'invention concerne tout type de réseau à plan de contrôle GMPLS.

Un réseau du type précité comporte de façon très schématique, mais suffisante à la compréhension de l'invention, une multiplicité d'équipements de réseau qui constituent des noeuds et sont raccordés les uns aux autres par des liens, et à certains desquels peuvent être connectés des sous-réseaux locaux de terminaux de communication ou d'entreprises (non représentés), ou parfois des terminaux isolés.

Le type d'un équipement de réseau (ou noeud) dépend de ses capacités de commutation. Il peut notamment s'agir d'un routeur à commutation d'étiquettes (ou routeur LSP (pour « Label Switched Path »)).

Les noeuds du réseau s'échangent en permanence des messages de routage (ou annonces) selon un protocole de routage distribué, comme par exemple OSPF-TE (« Open Shortest Path First - Traffic Engineering ») ou IS-IS-TE (« Intermediate System - Intermediate System - Traffic Engineering»). Ces messages (ou annonces) contiennent des informations de routage représentatives de certaines caractéristiques des liens entre noeuds (TE-LSAs (« Traffic Engineering - Link State Advertisements »)), comme par exemple la bande passante utilisée ou disponible.

Les informations de routage contenues dans ces messages (ou annonces) de routage permettent aux noeuds de calculer les routes (ou chemins) qui servent à router les trafics.

Le calcul des routes peut se faire au moyen de n'importe quel algorithme connu de l'homme de l'art.

Comme cela est schématiquement et fonctionnellement illustré sur l'unique figure, chaque noeud (ou équipement de réseau) N comprend :
- un module de routage (également appelé module de calcul de routes) MR,
- un module de transmission (ou « forwarding ») MF couplé à sa ou ses interfaces (non représentées),
- des premiers moyens de stockage BD1 qui sont généralement agencés sous la forme de deux bases de données de routage éventuellement séparées, appelées base d'informations de routage et base d'informations de transmission, et
- des seconds moyens de stockage BD2 destinés à stocker les données d'information de routage contenues dans les messages (ou annonce) de routage reçus par les interfaces (flèche FE).

Il est rappelé que la base d'informations de routage stocke les données (ou informations) de routage nécessaires au module de transmission MF pour router les trafics reçus vers un routeur suivant. Ces données de routage sont déterminées (ou calculées) par le module de routage MR à partir des données contenues dans les messages (ou annonces) de routage et qui sont stockées dans les seconds moyens de mémorisation BD2.

La base d'informations de transmission BD1 stocke des données (ou informations) de routage permettant au module de transmission MF de router les trafics vers un routeur suivant. Ces données sont essentiellement représentatives d'informations de (re)transmission extraites de la base d'informations de routage BD1.

Les données (ou informations) de routage, stockées dans les moyens de stockage BD1, constituent ce que l'on appelle habituellement les tables de routage du noeud N. Elles sont mises à jour par le module de routage (ou de calcul de routes) MR en fonction des routes qu'il détermine.

Chaque noeud N comporte également un module de génération de messages de routage MG chargé de gérer l'émission, via les interfaces de sortie, des messages de routage destinés aux autres noeuds du réseau (flèche FS). Dans l'exemple illustré, le module de génération MG est implanté dans le module de transmission MF, mais cela n'est pas obligatoire.

L'invention propose de fournir aux noeuds du réseau, à plan de contrôle de type GMPLS, des messages de routage représentant certaines au moins des caractéristiques inhomogènes (ou variables) d'une ou plusieurs connexions établies entre des équipements de réseau (ou noeuds) N lors de leurs déclarations dans leur domaine de routage.

Cette représentation d'une connexion constitue une structure linéaire de type bus qui est ci-après appelée adjacence de transmission à accès multiple ou FAMA (pour « Forwarding Adjacency Multiple Access »). Ces structures FAMA sont dérivées des structures FA (pour « Forwarding Adjacency ») qui sont bien connues de l'homme de l'art et au sujet desquelles des informations détaillées peuvent être notamment trouvées sur le site de l'IETF (« Internet Engineering Task Force »).

Pour un noeud du réseau une structure FAMA est une représentation d'une connexion qui s'étend entre plusieurs noeuds qui offrent chacun par leur(s) interface(s) un ou plusieurs points d'entrée et/ou de sortie.

Selon l'invention, ces messages de routage sont générés par un dispositif de génération de messages de routage D.

Comme cela est illustré à titre d'exemple non limitatif, ce dispositif peut être le module de génération de messages de routage MG qui est implanté dans chaque noeud N. Mais, il pourrait s'agir d'une partie de ce module MG, ou d'un élément de réseau complémentaire à ce module MG, ou encore d'un élément de réseau centralisé opérant pour l'ensemble des noeuds ou une partie seulement d'entre eux et couplé à leurs modules MG respectifs.

Le dispositif de génération de messages de routage D, selon l'invention, comprend un module de traitement MT chargé de générer au moins les messages de routage qui représentent certaines au moins des caractéristiques inhomogènes (ou variables) des connexions.

Selon l'invention, chaque message de routage (qui définit une structure FAMA) comprend un attribut comportant des données d'information d'ingénierie de trafic (TE) relatives à chaque segment reliant deux équipements de réseau participant à cette structure FAMA et représentatives des caractéristiques inhomogènes des segments.

L'attribut contenant les données d'information représentatives de caractéristiques inhomogènes des segments d'une structure FAMA peut être par exemple un attribut complémentaire que le module de traitement MT adjoint aux attributs (ou objets) traditionnels de liens d'ingénierie de trafic (« TE link») d'un message (ou annonce) de type TE-LSA.

L'emplacement des données d'information dans un message de routage présentant une structure FAMA dépend évidemment du protocole de routage distribué qui est utilisé pour le transmettre. Il peut notamment s'agir du protocole OSPF-TE ou du protocole IS-IS-TE. Par ailleurs, chaque message de routage présentant une structure FAMA peut être une instance d'un message du protocole de routage utilisé.

Les données d'information transmises (représentatives de caractéristiques inhomogènes de segments) sont par exemple certaines au moins des capacités d'insertion/extraction des interfaces que comprend chaque équipement de réseau N qui participe à une structure FAMA. Parmi les capacités d'interface qui peuvent être spécifiées, on peut notamment citer le débit d'accès et la bande passante disponible.

Mais, les données d'informations transmises (représentatives de caractéristiques inhomogènes de segments) peuvent être également la bande passante et/ou le niveau de protection de chaque segment de la structure FAMA concernée. D'une manière générale, toute information d'ingénierie de trafic, utile au routage et concernant un segment entre deux noeuds N participant à une structure FAMA et les noeuds N de ce segment, et notamment leurs interfaces, peut être intégrée dans un message de routage.

Par ailleurs, le module de traitement MT peut par exemple être agencé de manière à regrouper les données d'informations d'une structure FAMA, représentatives des caractéristiques inhomogènes de la connexion correspondante, au sein d'un multiplet (ou n-uplet). Un multiplet peut par exemple se présenter sous la forme d'un vecteur.

A titre d'exemple, ils peuvent regrouper les données d'information des interfaces qui offrent des capacités d'insertion/extraction inhomogènes.

De plus, le module de traitement MT peut par exemple regrouper au sein d'un singleton toutes les données d'information qui sont communes à l'ensemble des segments d'une structure FAMA. Ainsi, on constitue des groupes d'identifiants d'interfaces associés chacun à une ou plusieurs capacités communes, ce qui permet de réduire le nombre de données de l'attribut. Mais, on pourrait procéder différemment, par exemple en spécifiant pour chaque interface de chaque noeud une ou plusieurs capacités.

Grâce aux données d'information qui spécifient les structures FAMA et qui sont contenues dans les messages de routage, les modules de routage MR des noeuds N peuvent calculer des routes (ou chemins) qui correspondent non seulement à l'état des liens entre eux, mais également à l'état dans lequel se trouve chaque noeud et chaque segment du réseau. Ainsi, un trafic issu d'un noeud peut effectivement suivre la route qui a été calculée à cet effet.

L'invention offre en outre de nouvelles possibilités d'ingénierie de trafic. En effet, il est désormais possible à un opérateur de réseau de restreindre l'accès à certaines ressources du réseau en imposant certaines capacités au niveau de certains points d'entrée et/ou de sortie, notamment.

Le dispositif de génération de messages de routage D selon l'invention, et notamment son module de traitement MT, peuvent être réalisés sous la forme de circuits électroniques, de modules logiciels (ou informatiques), ou d'une combinaison de circuits et de logiciels.

L'invention ne se limite pas aux modes de réalisation de dispositif de génération de messages de routage et d'équipement de réseau décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de réalisation d'un dispositif de génération de messages de routage implanté dans un noeud, et plus précisément constituant un module dédié à la génération de l'ensemble des messages de routage. Mais, lorsque le dispositif ne fait pas partie de ce module dédié, il peut être simplement chargé de lui fournir les messages de routage qui spécifient les structures FAMA.

## Revendications

1. Procédé de génération de messages de routage pour un réseau de communication fonctionnant avec un plan de contrôle de type GMPLS, comprenant la génération des messages de routage contenant chacun un attribut comportant des données d'information d'ingénierie de trafic (TE), **caractérisé en ce que** lesdits données d'information d'ingénierie de trafic (TE) sont représentatives de caractéristiques inhomogènes de segments d'au moins une connexion entre équipements de réseau (N) lors de sa déclaration dans son domaine de routage, ladite représentation de cette connexion définissant ainsi une structure de type bus linéaire, appelée adjacence de transmission à accès multiple, désignée ci-après par FAMA et étant une représentation d'une connexion qui s'étend entre plusieurs noeuds qui offrent chacun par leur(s) interface(s) un ou plusieurs points d'entrée et/ou de sortie ; et **en ce que** l'information d'ingénierie de trafic représentatives de caractéristiques inhomogènes de segments comprend au moins une information utile au routage et concerne un segment entre deux noeuds N participant à une structure FAMA et les noeuds N de ce segment.

2. Procédé selon la revendication 1, **caractérisé en ce que** certaines au moins desdites données d'information représentatives des caractéristiques inhomogènes des segments de ladite connexion sont relatives à certaines au moins des capacités d'insertion/extraction d'interfaces que comprend chaque équipement de réseau (N) participant à une structure FAMA.

3. Procédé selon l'une des revendications 1 et 2, **caractérisé en ce que** certaines au moins desdites données d'information représentatives des caractéristiques inhomogènes des segments de ladite connexion sont relatives à une information d'ingénierie de trafic, utile au routage et concernant un segment entre deux équipements de réseau (N), participant à une structure FAMA, ou les équipements de réseau (N) dudit segment.

4. Procédé selon l'une des revendications 1 à 3, **caractérisé en ce que** l'on regroupe lesdites données d'information représentatives des caractéristiques inhomogènes des segments de ladite connexion au sein d'un multiplet.

5. Procédé selon l'une des revendications 2 à 4, **caractérisé en ce que** lesdites capacités d'insertion/extraction des interfaces sont choisies dans un groupe comprenant au moins le débit d'accès et la bande passante disponible.

6. Procédé selon l'une des revendications 1 à 5, **caractérisé en ce que** chaque message de routage présentant une structure FAMA est une instance d'un message d'un protocole de routage distribué choisi dans un groupe comprenant au moins OSPF-TE et IS-IS-TE.

7. Dispositif (D) de génération de messages de routage pour un réseau de communication fonctionnant avec un plan de contrôle de type GMPLS, comprenant des moyens de traitement (MT) agencés pour générer des messages de routage contenant un attribut comportant chacun des données d'information d'ingénierie de trafic (TE) **caractérisé en ce que** lesdits données d'information d'ingénierie de trafic (TE) sont représentatives de caractéristiques inhomogènes de segments d'au moins une connexion entre équipements de réseau (N) lors de sa déclaration dans son domaine de routage, ladite représentation de cette connexion définissant ainsi une structure de type bus linéaire, appelée adjacence de transmission à accès multiple, désignée ci après par FAMA et étant une représentation d'une connexion qui s'étend entre plusieurs noeuds qui offrent chacun par leur(s) interface(s) un ou plusieurs points d'entrée et/ou de sortie; et **en ce que** l'information d'ingénierie de trafic représentatives de caractéristiques inhomogènes de segments comprend au moins une information utile au routage et concerne un segment entre deux noeuds N participant à une structure FAMA et les noeuds N de ce segment.

8. Dispositif selon la revendication 7, **caractérisé en ce que** certaines au moins desdites données d'information représentatives des caractéristiques inhomogènes des segments de ladite connexion sont relatives à certaines au moins des capacités d'insertion/extraction d'interfaces que comprend chaque équipement de réseau (N) participant à la structure FAMA correspondante.

9. Dispositif selon l'une des revendications 7 et 8, **caractérisé en ce que** certaines au moins desdites données d'information représentatives des caractéristiques inhomogènes des segments de ladite connexion sont relatives à une information d'ingénierie de trafic, utile au routage et concernant un segment entre deux équipements de réseau (N), participant à une structure FAMA, ou les équipements de réseau (N) dudit segment.

10. Dispositif selon l'une des revendications 7 à 9, **caractérisé en ce que** lesdits moyens de traitement (MT) sont agencés pour regrouper lesdites données d'information représentatives des caractéristiques inhomogènes des segments de ladite connexion au sein d'un multiplet.

11. Dispositif selon l'une des revendications 8 à 10, **caractérisé en ce que** lesdites capacités d'insertion/extraction des interfaces sont choisies dans un groupe comprenant au moins le début d'accès et la bande passante disponible.

12. Dispositif selon l'une des revendications 7 à 11, **caractérisé en ce que** lesdits moyens de traitement (MT) sont agencés pour générer des messages de routage présentant des structures FAMA sous la forme d'instances de messages d'un protocole de routage distribué choisi dans un groupe comprenant au moins OSPF-TE et IS-IS-TE.

13. Equipement de réseau (N) pour un réseau de communication fonctionnant avec un plan de contrôle de type GMPLS, **caractérisé en ce qu'**il comprend un dispositif de génération de messages de routage (D) selon l'une des revendications 7 à 12.

## Patentansprüche

1. Verfahren zur Erzeugung von Routing-Nachrichten für ein Kommunikationsnetzwerk, welches mit einer Steuerebene vom Typ GMPLS betrieben wird, umfassend das Erzeugen von Routing-Nachrichten, welche jeweils ein Attribut mit verkehrstechnischen (TE) Informationsdaten enthalten, **dadurch gekennzeichnet, dass** die besagten verkehrstechnischen (TE) Informationsdaten für inhomogene Eigenschaften von Segmenten mindestens einer Verbindung zwischen Netzwerkvorrichtungen (N) während der Anmeldung in ihrem Routing-Bereich darstellend sind, wobei die besagte Darstellung dieser Verbindung folglich eine Struktur vom Typ eines linearen Busses, Mehrfachzugriffs-Übertragungsstruktur genannt und nachfolgend als FAMA bezeichnet, definiert und eine Darstellung einer Verbindung, welche sich zwischen mehreren Knoten, die jeweils über ihre Schnittstelle(n) einen oder mehrere Eingangs- und/oder Ausgangspunkte bereitstellen, erstreckt; und dass die verkehrstechnischen Informationen, welche für inhomogene Eigenschaften von Segmenten darstellend sind, mindestens eine Information, die für das Routing nützlich ist und ein Segment zwischen zwei Knoten N, die an einer FAMA-Struktur beteiligt sind, und den Knoten N dieses Segments betrifft, enthalten.

2. Verfahren nach Anspruch 1, **dadurch gekennzeichnet, dass** sich zumindest bestimmte der besagten Informationsdaten, welche die inhomogenen Eigenschaften der Segmente der besagten Verbindung darstellen, auf zumindest bestimmte der Kapazitäten zum Einfügen/Extrahieren von Schnittstellen, die in jeder Netzwerkvorrichtung (N), welche an einer FAMA-Struktur beteiligt ist, umfasst sind, beziehen.

3. Verfahren nach einem der Ansprüche 1 und 2, **dadurch gekennzeichnet, dass** sich zumindest bestimmte der besagten Informationsdaten, welche die inhomogenen Eigenschaften der Segmente der besagten Verbindung darstellen, auf eine verkehrstechnische Information, die für das Routing nützlich ist und ein Segment zwischen zwei Netzwerkvorrichtungen (N), welche an einer FAMA-Struktur beteiligt sind, oder die Netzwerkvorrichtungen (N) des besagten Segments betrifft, beziehen.

4. Verfahren nach einem der Ansprüche 1 bis 3, **dadurch gekennzeichnet, dass** man die besagten Informationsdaten, welche die inhomogenen Eigenschaften der Segmente der besagten Verbindung darstellen, innerhalb eines Multipletts gruppiert.

5. Verfahren nach einem der Ansprüche 2 bis 4, **dadurch gekennzeichnet, dass** die besagten Kapazitäten zum Einfügen/Extrahieren der Schnittstellen in einer Gruppe, welche mindestens den Zugriffsdurchsatz und die verfügbare Bandbreite umfasst, ausgewählt werden.

6. Verfahren nach einem der Ansprüche 1 bis 5, **dadurch gekennzeichnet, dass** jede Routing-Nachricht, welche eine FAMA-Struktur aufweist, eine Nachrichteninstanz eines verteilten Routing-Protokolls, ausgewählt in einer Gruppe, welche mindestens OSPF-TE und IS-IS-TE umfasst, ist.

7. Vorrichtung (D) zur Erzeugung von Routing-Nachrichten für ein Kommunikationsnetzwerk, welches mit einer Steuerebene vom Typ GMPLS betrieben wird, umfassend Verarbeitungsmittel (MT), welche für das Erzeugen von Routing-Nachrichten, die jeweils ein Attribut mit verkehrstechnischen (TE) Informationsdaten enthalten, ausgelegt sind, **dadurch gekennzeichnet, dass** die besagten verkehrstechnischen (TE) Informationsdaten für inhomogene Eigenschaften von Segmenten mindestens einer Verbindung zwischen Netzwerkvorrichtungen (N) während der Anmeldung in ihrem Routing-Bereich darstellend sind, wobei die besagte Darstellung dieser Verbindung folglich eine Struktur vom Typ eines linearen Busses, Mehrfachzugriffs-Übertragungsstruktur genannt und nachfolgend als FAMA bezeichnet, definiert und eine Darstellung einer Verbindung, welche sich zwischen mehreren Knoten, die jeweils über ihre Schnittstelle(n) einen oder mehrere Eingangs- und/oder Ausgangspunkte bereitstellen, erstreckt; und dass die verkehrstechnischen Informationen, welche für inhomogene Eigenschaften von Segmenten darstellend sind, mindestens eine Information, die für das Routing nützlich ist und ein Segment zwischen zwei Knoten N, die an einer FAMA-Struktur beteiligt sind, und den Knoten N dieses Segments betrifft, enthalten.

8. Vorrichtung nach Anspruch 7, **dadurch gekennzeichnet, dass** sich zumindest bestimmte der besagten Informationsdaten, welche die inhomogenen Eigenschaften der Segmente der besagten Verbindung darstellen, auf zumindest bestimmte der Einfügungs-/Extraktionskapazitäten Kapazitäten zum Einfügen/Extrahieren von Schnittstellen, die in jeder Netzwerkvorrichtung (N), welche an einer FAMA-Struktur beteiligt sind, umfasst sind, beziehen.

9. Vorrichtung nach einem der Ansprüche 7 und 8, **dadurch gekennzeichnet, dass** sich zumindest bestimmte der besagten Informationsdaten, welche die inhomogenen Eigenschaften der Segmente der besagten Verbindung darstellen, auf eine verkehrstechnische Information, die für das Routing nützlich ist und ein Segment zwischen zwei Netzwerkvorrichtungen (N), welche an einer FAMA-Struktur beteiligt sind, oder die Netzwerkvorrichtungen (N) des besagten Segments betrifft, beziehen.

10. Vorrichtung nach einem der Ansprüche 7 bis 9, **dadurch gekennzeichnet, dass** die besagten Verarbeitungsmittel (MT) für das Gruppieren der besagten Informationsdaten, welche die inhomogenen Eigenschaften der Segmente der besagten Verbindung darstellen, innerhalb eines Multipletts ausgelegt sind.

11. Vorrichtung nach einem der Ansprüche 8 bis 10, **dadurch gekennzeichnet, dass** die besagten Einfügungs-/Extraktionskapazitäten der Schnittstellen in einer Gruppe, welche mindestens den Zugriffsdurchsatz und die verfügbare Bandbreite umfasst, ausgewählt werden.

12. Vorrichtung nach einem der Ansprüche 7 bis 11, **dadurch gekennzeichnet, dass** die besagten Verarbeitungsmittel (MT) für das Erzeugen von Routing-Nachrichten, welche FAMA-Strukturen aufweisen, in der Form von Nachrichteninstanzen eines verteilten Routing-Protokolls, ausgewählt in einer Gruppe, welche mindestens OSPF-TE und IS-IS-TE umfasst, ausgelegt sind.

13. Netzwerkvorrichtung (N) für ein Kommunikationsnetzwerk, welches mit einer Steuerebene vom Typ GMPLS betrieben wird, **dadurch gekennzeichnet, dass** sie eine Vorrichtung zur Erzeugung von Routing-Nachrichten (D) gemäß einem der Ansprüche 7 bis 12 umfasst.

## Claims

1. A method for generating routing messages for a communication network operating with a GMPLS control plane, comprising the generating of routing messages each containing an attribute comprising traffic engineering information data (TE), **characterized in that** said traffic engineering information data (TE) is representative of non-homogeneous characteristics of segments of at least one connection between network elements (N) during its deceleration within its routing domain, said representation of that connection thereby defining a linear bus structure, called fixed assigned multiple access, hereafter referred to as FAMA, and being a representation of a connection that extends between multiple nodes that each offer, via their interface(s), one or more entry points and/or exit points; and **in that** the traffic engineering information representative of non-homogeneous characteristics of segments comprises at least one piece of information useful for routing and concerning a segment between two nodes N involved in a FAMA structure and the nodes N of that segment.

2. A method according to claim 1, **characterized in that** at least some of said information data representative of the non-homogeneous characteristics of the segments of said connection relate to at least some of the interface add/drop capabilities that each network element (N) involved in an FAMA structure comprises.

3. A method according to one of the claims 1 and 2, **characterized in that** at least some of said information data representative of the non-homogeneous characteristics of the segments of said connection relate to traffic engineering information that is useful for routing and concerns a segment between two network elements (N) involved in an FAMA structure, or the network elements (N) of said segment.

4. A method according to one of the claims 1 to 3, **characterized in that** said information data representative of the non-homogenous characteristics of the segments of said connection are collected into a multiplet.

5. A method according to one of the claims 2 to 4, **characterized in that** said interface add/drop capabilities are chosen from a group comprising at least access bitrate and available bandwidth.

6. A method according to one of the claims 1 to 5, **characterized in that** each routing message having a FAMA structure is an instance of a message of a distributed routing protocol chosen from a group comprising at least OSPF-TE and IS-IS-TE.

7. A device (D) for generating routing messages for a communication network operating with a GMPLS control plane, comprising processing means (MT) arranged to generate routing messages containing an attribute comprising each of the pieces of traffic engineering information data (TE), **characterized in that** said traffic engineering information data (TE) is representative of non-homogeneous characteristics of segments of at least one connection between network elements (N) during its deceleration within its routing domain, said representation of that connection thereby defining a linear bus structure, called fixed assigned multiple access, hereafter referred to as FAMA, and being a representation of a connection that extends between multiple nodes that each offer, via their interface(s), one or more entry points and/or exit points; and **in that** the traffic engineering information representative of non-homogeneous characteristics of segments comprises at least one piece of information useful for routing and concerning a segment between two nodes N involved in a FAMA structure and the nodes N of that segment.

8. A device according to claim 7, **characterized in that** at least some of said information data representative of the non-homogeneous characteristics of the segments of said connection relate to at least some of the interface add/drop capabilities that each network element (N) involved in an FAMA structure comprises.

9. A device according to any of the claims 7 and 8, **characterized in that** at least some of said information data representative of the non-homogeneous characteristics of the segments of said connection relate to traffic engineering information that is useful for routing and concerns a segment between two network elements (N) involved in an FAMA structure, or the network elements (N) of said segment.

10. A device according to one of the claims 7 to 9, **characterized in that** said processing means (MT) are arranged to collect said information data representative of the non-homogeneous characteristics of the segments of said connection into a multiplet.

11. A device according to one of the claims 8 to 10, **characterized in that** said interface add/drop capabilities are chosen from a group comprising at least access speed and available bandwidth.

12. A device according to one of the claims 7 to 11, **characterized in that** said processing means (MT) are arranged to generate routing messages having FAMA structures in the form of instances of messages of a distributed routing protocol chosen from a group comprising at least OSPF-TE and IS-IS-TE.

13. A network element (N) for a communication network operating with a GMPLS control plane, **characterized in that** it comprises a device for generating routing messages (D) according to one of the claims 7 to 12.
